# EUROPEAN PATENT APPLICATION

(11) **EP 2 072 912 A2**
(43) Date of publication of application: **24.06.2009**
(21) Application number: 08018725.5
(22) Date of filing: 27.10.2008
(51) Int. Cl.: F24D 3/08, F24D 11/00, F24D 12/02, F24H 1/50

(54) **Combined storage tank**

(30) Priority: 17.12.2007 IT AN20070070
(71) Applicant: SUNERG SOLAR S.R.L., 06010 Cinquemiglia-Città di Castello (PG) (IT)
(72) Inventor: Lauri, Daniele, 06010 Cinquemiglia-Città'di Castello (PG) (IT)
(74) Representative: Gentili, Enrico

(57) **Abstract**

The subject of the present invention is a combined storage tank (1) to be used in heating systems with two different liquids, in particular, domestic water and space heating water comprising a storage (3), capable of containing space heating water, and a domestic boiler (2) capable of containing domestic water, being the water contained in said domestic boiler (2) heated by the water of said storage (3). According to the invention, the lower cover (205) of said domestic boiler (2) is housed within the upper cover (302) of storage (3), said cover (302) being assembled upside down with the concavity outward-facing from storage (3).

## Description

The object of the present patent is a combined storage tank to be used in heating systems with two different liquids where said liquids are domestic and space heating water.

More specifically, the object of the present invention is a combined storage tank for solar systems.

The invention therefore relates to the sector of alternative energy and that of using solar energy for heating fluid, usually water (solar thermal), in particular, a sector that is undergoing constant expansion due to a more decisive, attractive policy of tax relief and benefits.

The technology at the basis of thermal solar systems has been consolidated and known for decades and there is therefore no need for a detailed description.

It will suffice to point out that a solar system, for example, a forced circulation one, consists of at least one solar collector connected via a circuit, known as a "solar circuit", to a storage tank which is usually located inside a building and, in turno, connected to at least one circuit for space heating and/or domestic hot water.

Using said storage tank, the heat produced by the intermittent, variable generators can be stored and made available when needed.

A heat transfer fluid (hereinafter referred to as "solar fluid") flows through the solar circuit heated by solar radiation incident on the solar collector.

A circulation pump activates circulation of the solar fluid from the collector to the storage tank where, by way of a heat exchanger, usually a coil one, it transfers the absorbed heat to the water contained therein.

Heat exchange is effected so that layers of water with different temperatures and densities are formed in the tank with the hottest water at the top of the tank and the coldest at the bottom.

To optimize and maintain said thermal layering as far as possible, the storage tank should be cylindrical, high and narrow.

These conditions are obtained with vertical storage tanks.

There are also systems that do not have the aforementioned circulation pump.

In other systems, the solar fluid coincides with the operating fluid, ie. systems with no heat exchanger.

In any case, steps are taken to obtain the aforementioned layering.

Usually, a solar system alone is not able to bring the water in the tank to the temperature needed by the users (eg. in winter or days when there is little sunlight); in these cases, additional heat generators need to be added to the solar circuit.

There is a wide range of storage tanks that can be classified according to their characteristics and the way they operate.

In storage tanks with an external heat exchanger, heat exchange between the solar fluid and the tank water takes place in an external plate-type or tube-bundle heat exchanger.

Double-wall tanks, on the other hand, have a chamber in which the solar fluid can circulate on the side surface. Said tanks are used especially for small residential installations.

Storage tanks with internal heat exchangers, for example, coil tanks, are widely used.

In said tanks, the water is heated by the solar fluid that crosses the coil located within the tank. As already mentioned, said tanks may sometimes contain inside a second coil that is usually connected to an auxiliary heat generator; in this case, the solar system is integrated into the heat production.

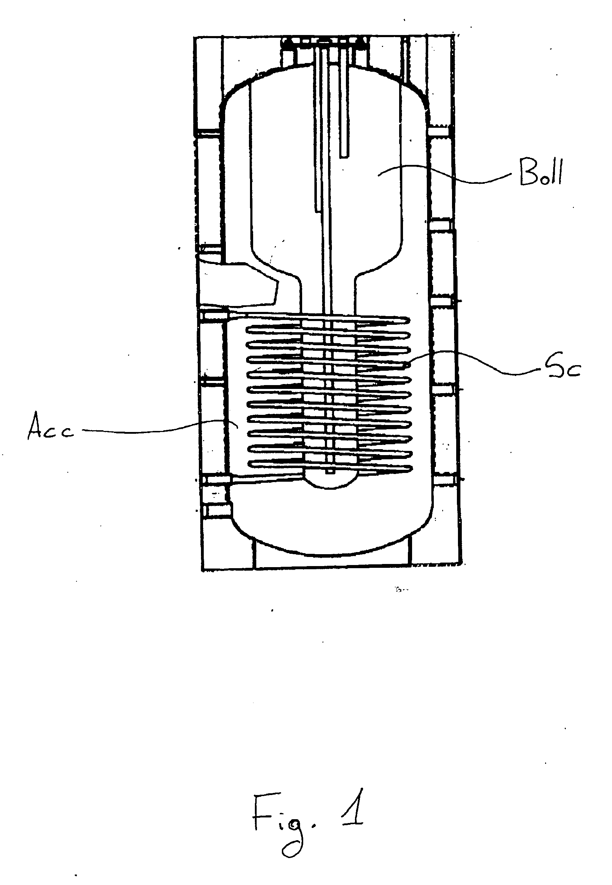

Finally, there are combined storage tanks, also known as "Tank in Tank" or "Kombi" systems that are used for domestic hot water production and heating (see Figure 1).

These tanks consists of a large capacity storage tank (hereinafter referred to as "storage"), containing the fluid for space heating (usually water), which can house a second tank for domestic water.

The domestic water tank (hereinafter referred to as "domestic boiler") is positioned in the top of the storage to which it is welded, and is fully immersed in the water contained therein, so that it receives its heat through its walls.

The bottom of the tank, on the other hand, houses the heat exchanger of the solar circuit. This exchanger is usually a coil exchanger.

To improve and optimize domestic water heating, the coils of said coil heat exchanger can also be partially wound around said domestic water boiler.

In this way, the domestic water is also heated by the solar fluid as well as the heat of the water in the storage.

The fact that the connections for the drawing of hot water and entry of colder water in the tank are placed at different heights does not penalize the thermal layering that has been previously mentioned.

This solution can be used to draw water at the required temperature and enter water to the tank at the layer that is of the same temperature, thereby preventing it from being mixed with the mass of water already present.

Said "Tank in Tank" combined storage tanks have the advantage of being extremely compact and limited in size due to the fact that the domestic boiler and storage are combined in one single body.

Said combined storage tanks do however have some disadvantages.

First, if the domestic boiler is full of cold water, the water in the storage cools down considerably and this process cannot be avoided if not required.

In addition, if there is no pressure in the domestic hot water circuit, the domestic boiler may implode because of the higher pressure exerted externally by the water in the storage.

This problem is at least partially resolved by providing the domestic boiler with external reinforcing ribbing.

Since the boiler and the storage are a single body, there are a lot of restrictions in the design technology and materials that can be used; for example, their protective coating must be identical even when not necessary.

Said combined storage tank is also complex and expensive to build.

Obviously, if there is a rupture in the domestic boiler only, maintenance work or replacement must be effected on the entire combined storage tank and considerable costs are incurred.

Handling the combined storage tank, as described above, during installation or replacement is also rather difficult because of its considerable size and weight.

Obviously, before "Kombi" tanks were developed, the storage and boiler consisted of conventional tanks installed separately that were connected by pipes. They had larger volumes and occupied more space with less heat transmission efficiency from one to the other and greater heat loss.

The development of "Kombi" systems has eliminated these problems but introduced those discussed above.

The object of the present invention is to resolve at least part of the disadvantages listed above with a combined storage tank with a simplified and innovative construction.

In particular, the principal object of the present invention is to provide a combined storage tank that can be simply and quickly installed without increasing its overall size.

Another object of the present invention is to provide a storage tank capable of reducing maintenance costs.

These and other objects that will become better apparent hereinafter are achieved with a combined storage tank compliant with the description in claim 1.

Further objects can also be obtained by means of the supplementary features described in the subordinate claims.

Further features of the present invention are more clearly explained in the following description of preferred embodiments according to the present invention and illustrated, purely for explanatory but by no means limitative reasons, in the appended drawings, wherein:
- Figure 1 is a cross-sectional view of the combined storage tank according to the known art.
- Figure 2 is a scheme of the plant using the combined storage tank according to the invention.
- Figure 3 is a cross-sectional view of the combined storage tank according to the invention.

Fig. 1 illustrates a known "Kombi" system and in particular illustrates the storage Acc, the boiler Boll and the coil heat exchanger Sc.

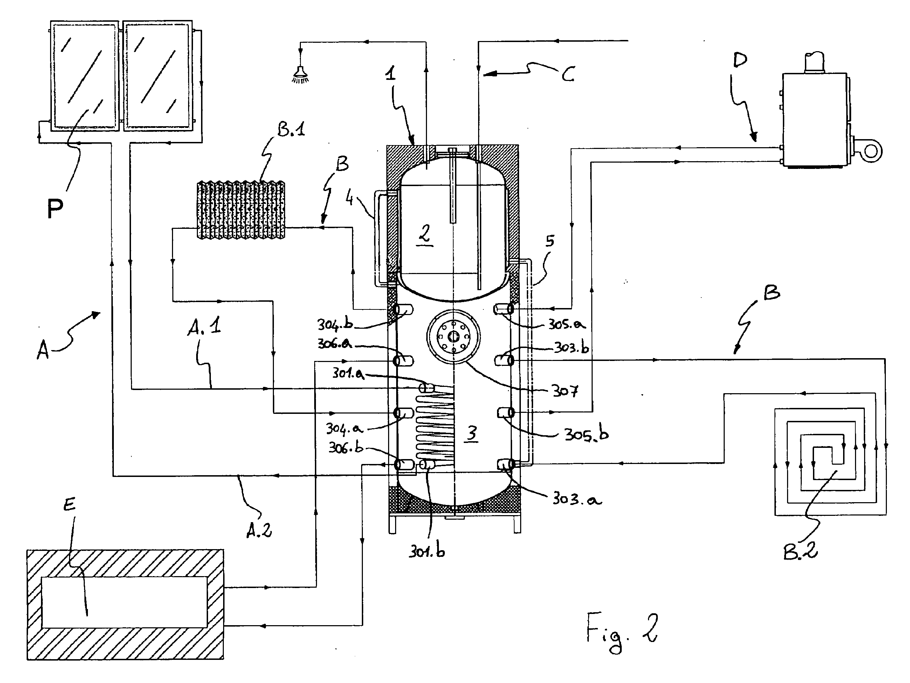

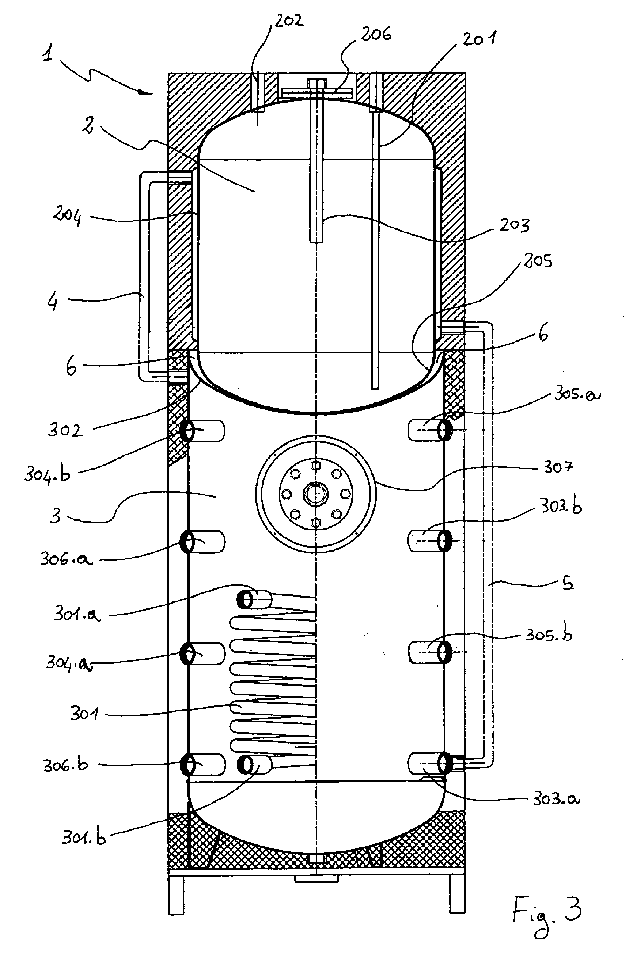

Below is a description of the essential features of the invention using the numerical references in figures 2 and 3.

With reference to Figure 2, 1 indicates a storage tank capable of storing thermal energy supplied by intermittent, variable operating heat generators such as solar collectors.

The combined storage tank 1 and its innovative aspects will be discussed in more detail below.

At present, it is sufficient to observe how the heat stored in said tank is used to supply at least one space heating system and one for the distribution of domestic hot water.

Indeed, figure 2 shows said storage tank 1 connected to a solar circuit A capable of converting solar radiation into thermal energy, to circuits B for space heating and to a circuit C for distribution of the domestic water.

In particular, B1 and B2 indicate the circuits for high temperature (radiator) and low temperature (floor) space heating respectively.

The solar circuit A comprises at least one solar collector P within which the solar fluid heated by the solar radiation incident on the collector flows.

A circulation pump, not shown in the figure, activates circulation of the solar fluid towards storage tank 1 where the absorbed heat is transferred.

D and E indicate auxiliary heat generators that are activated when the energy supply from the solar circuit A is insufficient (bad weather) or the consumption of hot water is excessive and abnormal.

For illustrative purposes, D indicates a gas-fired domestic boiler.

A detailed description of storage tank 1, subject of the invention as shown in figures 2 and 3, is now possible.

The storage tank 1, of the combined type for the production of domestic hot water and for space heating, comprises two separate tanks 2 and 3, suitably insulated according to the known art.

The first tank 2, said "domestic boiler", is capable of containing water for domestic use at mains pressure, whereas the second tank 3, with the same pressure as heating circuit B and greater storage capacity than the first, contains water for supplying space heating circuit B.

For simplicity of explanation, tank 3 will be referred to as "storage".

Generally speaking, in accordance with the known art and as shown in Figure 2, storage 3 contains at least one coil heat exchanger 301 but the exchanger may also be external, of a plate-type, for example.

By way of said coil heat exchanger 301, the solar fluid transfers the absorbed heat to the water contained in storage 3.

Due to the cylindrical shape and high height/diameter ratio of storage 3, the water so heated forms layers according to the temperature, with the hottest layers in the highest part of storage 3 and the coldest layers near the bottom.

More specifically, 301.a and 301.b indicate the sleeves of said coil exchanger 301 connected to delivery duct A.1 and return duct A.2 of the solar circuit A (see also Figure 1).

Similarly, 303.a and 303.b, 304.a and 304.b, 305.a and 305.b, 306.a and 306.b indicate the connections of the aforementioned circuits and/or heat generators B.1, B.2, D and E with storage 3, said connections being placed outside the storage 3 at different heights.

In this way, water can enter said storage 3 at the layer that is of the same temperature, thus guaranteeing that said thermal layering is maintained.

Water can also be extracted from storage 3 at a temperature suitable for specific uses.

In more detail, 303.b, 304.b, 305.a and 306.a indicate the connections to the storage 3 for the delivery ducts of high and low temperature space heating circuits B.2 and

B.1 and for the auxiliary heat generators D and E.

Similarly, 303.a, 304.a, 305.b and 306.b indicate the connections to the storage 3 of the return ducts of the same circuits and auxiliary heat generators described above.

For purely illustrative purposes, connection 304.a for entry of cooled water from circuit B.1 for high temperature space heating will be placed near the bottom of storage 3, whereas connection 304.b for the drawing of hot water will essentially be placed near the top of the tank.

307 indicates a flange that allows, in accordance with the known art, the insertion of a further auxiliary heat source, such as a simple electric heater.

Said flange 307 also enabled direct access to storage 3 for any cleaning or maintenance work.

Pockets for the insertion of probes and thermometers that can measure the temperature reached by the water within the storage 3 will also be included but are not shown in the figures.

Said domestic boiler 2 (see figure 3) comprises a duct 201 for the entry of domestic cold water placed near the bottom and a duct 202 for the drawing of domestic hot water for users near the top of boiler 2.

203 indicates an anti-corrosion cathodic protection device attached to the top of domestic boiler 2 by way of a flange 206.

Said anti-corrosion cathodic protection device 203 can be, in accordance with the known art, a magnesium sacrificial anode.

A sheath containing one or more thermostat sensors, not shown in the figures, can also be installed, using known means, on flange 206.

Connections and coupling to the heat distributors and users described herein are essentially equivalent to what is already known.

However, according to the known art, domestic boiler 2 is immerged in storage 3.

According to the invention, on the other hand, domestic boiler 2 is not placed within storage 3, although it is intimately constrained to it but in movable manner.

In fact as shown in Figure 2, domestic boiler 2 is placed externally to storage 3 and, more specifically, rests on it.

302 indicates the upper cover of storage 3 which serves as a support for said domestic boiler 2.

Said cover 302 is mounted "upside down" on storage 3, that is, with the concavity facing outwards.

The lower cover 205 of domestic boiler 2 is housed and rests within said upside-down cover 302, since the diameter of said boiler 2 is smaller than the diameter of storage 3, at least of the measure, also much small, sufficient to allow it to be housed there.

Said covers 205 and 302 may also have a geometrically similar profile, so that one can essentially be placed inside the other in order to facilitate heat transmission from the water in storage 3 to that of domestic boiler 2.

Said thermal contact and heat transmission can be improved by inserting a good heat-conducting liquid or mastic between said covers 205 and 302, so that the inevitable gaps, that form between said covers 205 and 302 at least for dimensional imperfections, can be filled even when the diameters of domestic boiler 2 and storage 3 are exactly the right size for perfect interpenetration.

In figures 2 and 3, said covers 205 and 302 are intentionally shown with sensibly different diameters to emphasize that, even in this case, heat transmission from storage 3 to boiler 2 can be good, if desired, using the above means.

However domestic boiler 2 positioned above storage 3 also comprises a double-wall heat exchanger 204 for heating of the water contained therein.

With specific reference to figure 2, said double-wall exchanger may comprise a jacket 204 that externally surrounds domestic boiler 2.

Said jacket 204 thus receives thermal carrier fluid capable of heating the water of the domestic boiler 2.

According to the invention, said thermal carrier fluid is the hot water that arrives by natural circulation from storage 3 underneath via delivery duct 4 and returns to storage 3 via return duct 5.

In correspondence of said jacket 204, a further and considerable heat exchange also takes place between the water from storage 3 and that in domestic boiler 2 through its side walls.

In order not to compromise the thermal layering in storage 3 and therefore said natural circulation, the water returning from jacket 204 through return duct 5 is reintroduced into storage 3 near the bottom.

For purely illustrative purposes which are by no means exhaustive, storage 3 can be made of carbon steel and may also not need anticorrosive treatment, since it is connected to the space heating system.

Domestic boiler 2, on the contrary, is usually made of enamelled steel.

It is therefore easy to understand how different protective coatings can be used for said domestic boiler 2 and storage 3.

Both storage 3 and domestic boiler 2 are then, as already stated, suitably insulated to reduce heat loss and therefore abnormal cooling of the water contained therein.

According to the known art, said insulation can consist of a layer of polyurethane 10-15 cm thick placed around said storage 3 and domestic boiler 2, so that external cases of the same diameter are obtained.

It is clear that a number of variations of the device object of the invention are possible for those skilled in the art without departing from the innovative concepts inherent in the invention and it is clear that, in the practical implementation of the invention, the various components described above may be replaced by technically equivalent elements.

For example, nothing prevents that the flow of water from storage 3 to jacket 204 of domestic boiler 2 could be also controlled by a circulation pump placed on delivery duct 4 or return duct 5.

In this way, forced circulation of the water from the storage 3 towards domestic boiler 2 is generated, improving significantly the heat exchange.

Another advantage in including a circulation pump is that, in this case, a check valve can be placed on delivery duct 4 or return duct 5.

The check valve has enough opening resistance (usually equal to 0.5 m of water column) to prevent natural circulation when the circulation pump is off, by preventing or limiting heating of domestic boiler 2 when not required (when the circulation pump is off, for example). In this simple way, the heating of boiler 2 can be excluded when not required.

Obviously, in another variation of the invention, the double-wall exchanger 204 of domestic boiler 2 can be replaced by a coil-type exchanger, inside or outside boiler 2 itself.

In this case, said coil must be connected, using known means, to delivery and return ducts 4 and 5 for the natural or forced circulation of the water in storage 3.

From the description hereinabove given, the principal advantages for the combined storage tank 1 according to the invention are easily ascertained.

It is clear that said storage tank 1 should preferably comprise at least two separate parts, one comprising storage 3 and the other boiler 2, constructed and shipped separately and assembled and constrained to each other, using known removable means, to create only in the moment of the installation a tank 1 with all the advantages of known "Kombi" systems including at least reduced space, improved heat transmission and limited heat loss.

Although said combined storage tank 1 consists of two separate and distinct parts (domestic boiler 2 and storage 3), it guarantees efficiency and dimensions equal to those of a combined storage tank according to known art (see fig. 1), but is considerably easier to build.

Transport, handling and installation of said combined storage tank 1 according to the invention is simplified.

Other advantages are the possibility of inspecting, servicing or replacing only the damaged element if necessary and the possibility of effecting different protective coatings on said two bodies contained in said tank 1.

## Claims

1. A combined storage tank (1) to be used in heating systems with two different liquids, particularly domestic and space heating water comprising:
- a storage (3), capable of containing space heating water,
- a domestic boiler (2) capable of containing domestic water, that in turn comprises at least,
- a duct (201) for entry of cold water
- a duct (202) for drawing of hot water to be distributed to users,
and being the water contained in said domestic boiler (2) heated by the water of said storage (3),
**characterized in that**
the lower cover (205) of said domestic boiler (2) is housed within the upper cover (302) of the storage (3), being said cover (302) assembled overturned with the concavity outward-facing from the storage (3).

2. Combined storage tank (1) according to the previous claim
**characterized in that**
said lower cover (205) of said domestic boiler (2) and upside-down cover (302) of said storage (3) are substantially placed one inside the other.

3. Combined storage tank (1) according to any previous claim
**characterized in that**
the gaps (6) between said lower cover (205) of domestic boiler (2) and said upside-down cover (302) of storage (3) are filled with a good heat-conducting liquid or mastic in order to improve said contact and resulting heat transmission.

4. Combined storage tank (1) according to any previous claim
**characterized in that**
said domestic boiler (2) also comprises a heat exchanger (204) for additional heating of domestic water contained therein.

5. Combined storage tank (1) according to the previous claim
**characterized in that**
said heat exchanger (204) of the domestic boiler (2) is a coil heat exchanger, internal or external to it.

6. Combined storage tank (1) according to claim 4
**characterized in that**
said heat exchanger (204) is a double-wall heat exchanger.

7. Combined storage tank (1) according to the previous claim
**characterized in that**
said double-wall exchanger (204) comprises a jacket that externally surrounds said domestic boiler (2), said jacket (204) being capable of receiving water that comes from the underneath storage (3) via delivery duct (4) and returns to storage (3) via return duct (5).

8. Combined storage tank (1) according to the previous claim
**characterized in that**
said return duct (5) reintroduces in the storage 3 the return water from said jacket (204) in correspondence of the bottom of said storage (3).

9. Combined storage tank (1) according to any previous claim
**characterized in that**
the water that comes from said storage (3) flows in said jacket (204) of the domestic boiler (2) by natural circulation.

10. Combined storage tank (1) according to any claim excluding 9
**characterized in that**
the water of the storage (3) flows in said jacket (204) by forced circulation, through the action of a circulation pump placed in said delivery (4) or return (5) ducts.

11. Combined storage tank (1) according to the previous claim
**characterized in that**
a check valve on the delivery (4) or return (5) ducts is placed, said check valve being capable of preventing the natural circulation of the water from storage (3) to the jacket (204).

12. Combined storage tank (1) according to any previous claim
**characterized in that**
said domestic boiler (2) and storage (3) can be constructed, transported and moved separately and can be assembled one on top of the other in a releasable manner when installed.

13. Combined storage tank (2) according to any previous claim
**characterized in that**
the protective coatings of said domestic boiler (2) and storage (3) are different.

14. Combined storage tank (2) according to any previous claim
**characterized in that**
said storage (3) is capable of comprising,
- a heat exchanger (301) connected to a solar circuit (A),
- connections (303.a, 303.b; 304.a, 304.b; 305.a, 305.b; 306.a, 306.b) for the connection at different heights of said storage (3) to the various circuits for space heating and/or auxiliary heat generators (B.1, B.2, D, E)
said elements being equivalent to those currently known in the art.

15. Solar system for the production of domestic hot water and space heating using a combined storage tank (1) as described in the previous claims.
